Europäisches Patentamt

European Patent Office

Office européen des brevets

(11) Publication number: **0 397 612**
**A1**

# EUROPEAN PATENT APPLICATION

(21) Application number: 90830187.2

(51) Int. Cl.⁵: **G01P 1/04, F16C 1/08**

(22) Date of filing: 30.04.90

(30) Priority: **12.05.89 IT 2106989 U**

(43) Date of publication of application:
**14.11.90 Bulletin 90/46**

(84) Designated Contracting States:
**DE ES FR GB**

(71) Applicant: **CAVIS CAVETTI ISOLATI S.p.A.**
**Via Roma, 31**
**I-15023 Felizzano (Alessandria)(IT)**

(72) Inventor: **Codrino, Giuseppe, Cavis Cavetti**
**Isolati S.p.A.**
**Via Roma, 31**
**I-15023 Felizzano (Alessandria)(IT)**

(74) Representative: **Cicogna, Franco**
**Ufficio Internazionale Brevetti Dott.Prof.**
**Franco Cicogna Via Visconti di Modrone,**
**14/A**
**I-20122 Milano(IT)**

(54) **Flexible driving device for motor vehicle speedometers including a quick spring coupling for coupling it to a drive assembly.**

(57) There is disclosed a flexible driving device for motor vehicle speedometers comprising a hollow shaft (1) which can be fixedly coupled to a drive assembly and a rotary core member (3), encompassed by a sheath (4), one end of which is locked in a bush (6) which can be sleeved on the hollow shaft (1) and restrained thereon by a radial engaging spring (9).

Fig.1

Fig.2

EP 0 397 612 A1

The present invention relates to a flexible driving device for motor vehicle speedometers including a quick spring coupling for coupling it to a drive assembly.

As is known, the motor vehicle speed is conventionally measured by measuring the angular speed of a rotary member of the motor vehicle, which angular speed defines a known ratio with the speed to be measured.

For example, conventional motor vehicle speedometers are adapted to automatically derive from the motor vehicle transmission rotary speed the motor vehicle running speed, which latter is displayed on a suitable display device.

In known speedometers, the coupling of the driving member arranged between the transmission and the display device generally comprises a threaded type of coupling on the transmission side and a fixed plug-in type of coupling on the speed display instrument side.

Thus, as the flexible driving member is to be removed, for example for a maintenance operation, it is necessary to preliminarily disengage said flexible member from the speed display instrument.

In fact, as stated, the coupling of the mentioned flexible driving member to the motor vehicle transmission assembly is a threaded type of coupling.

According, for disengaging the flexible member from the transmission side it is necessary to preliminarily disengage the end portion of said flexible member which is coupled to the speed display instrument.

This instrument, on the other hand, is conventionally mounted on the motor vehicle dashboard, to which there are moreover coupled a plurality of electrical cables provided for controlling a corresponding plurality of display instruments.

Thus, as the mentioned flexible member is disengaged and engaged again, the mentioned cables can be negatively affected.

## SUMMARY OF THE INVENTION

The aim of the present invention, therefore, is to overcome the above mentioned drawbacks, by providing a flexible driving member or device, for motor vehicle speedometers, which can be disengaged from the transmission assembly without disengaging the end thereof which is coupled to the speed display instrument.

Within the scope of the above mentioned aim, a main object of the present invention is to provide such a flexible driving device for motor vehicle speedometers which is very simple construction wise and very reliable in operation.

Another object of the present invention is to provide such a flexible driving device or member which can be coupled in a very simple and quick way to the motor vehicle drive assembly and to the speed display instrument

According to one aspect of the present invention, the above mentioned aim and objects, as well as yet other objects, which will become more apparent hereinafter, are achieved by a flexible driving device for motor vehicle speedometers characterized in that said device comprises a hollow shaft adapted to be firmly coupled to a drive assembly of the motor vehicle and a rotary core, encompassed by a sheath, one end of which is locked in a bush member adapted to be engaged on said hollow shaft and restrained thereon by a radial restraining spring.

## BRIEF DESCRIPTION OF THE DRAWINGS

Further characteristics and advantages of the flexible driving device according to the present invention will become more apparent from the follow ing description of a preferred embodiment thereof which is illustrated, by way of an indicative but not limitative example, in the figures of the accompanying drawings, where:

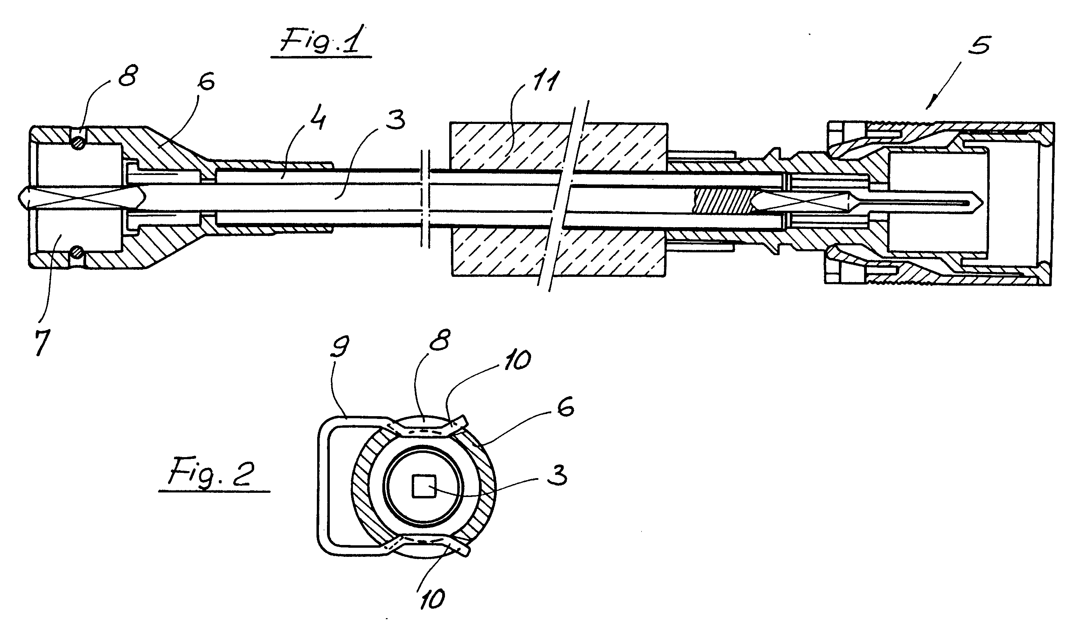

Figure 1 is a longitudinal cross-sectional view of the flexible driving device according to the invention;

Figure 2 shows a possible procedure for coupling said flexible driving device to a hollow shaft arranged on a motor vehicle drive assembly;

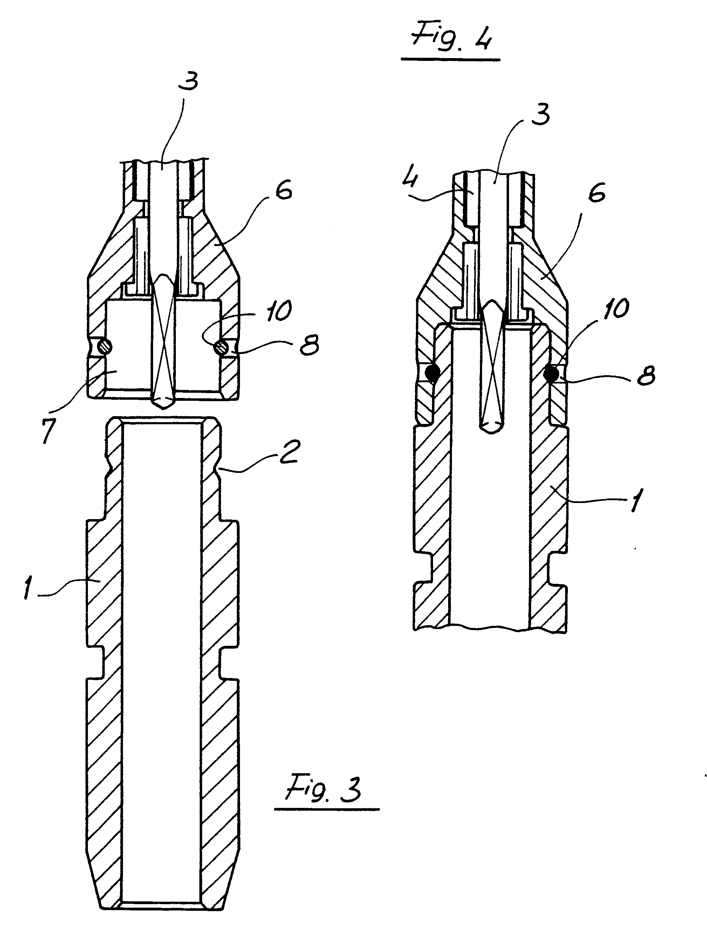

Figure 3 shows, by an exploded longitudinal cross-sectional view, the mentioned hollow shaft and a bush member engaged at one end of a rotary core member; and

Figure 4 shows the hollow shaft and bush member in a coupled condition.

## DESCRIPTION OF THE PREFERRED EMBODIMENT

With reference to the figures of the accompanying drawings, the flexible driving device for motor vehicle speedometers according to the invention comprises a hollow shaft 1 which can be firmly coupled to a drive assembly of the motor vehicle, which conventionally consists of the motor vehicle transmission.

This hollow shaft is provided, at its free end portion, with a circumferential slot 2.

The rotary core 3, which provides the driving member proper, is encompassed by a flexible sheath 4 at one end of which, that is the end which is provided for coupling to the motor vehicle speed display instrument, is connected a coupling member, of a substantially conventional type, overally indicated at the reference number 5.

On the opposite end portion of the mentioned sheath, there is locked a bush member 6 which is provided with a cylindrical recess 7 adapted to be engaged by the end portion of the mentioned hollow shaft.

The bush member is provided with two side notches 8, diametrically opposite to one another, adapted to restrain the two suitably shaped end portions of a resilient member 9 comprising, in particular, a spring.

More specifically, the arms 10 of the mentioned resilient member are provided with an inward bent portion adapted to press against the slot 2 of the hollow shaft so as to firmly restrain the bush 6 on said hollow shaft.

The sheath 4, moreover, is advantageously encompassed by a sound dampening tube 11 made of foamed polyethylene or the like.

From the above disclosure it should be apparent that the invention fully achieves the intended aim and objects.

While the invention has been disclosed and illustrated with reference to a preferred embodiment thereof, it should be apparent that the disclosed embodiment is susceptible to several modifications and variations all of which will come within the spirit and scope of the appended claims.

## Claims

1. A flexible driving device for motor vehicle speedometers, characterized in that said device comprises a hollow shaft which can be firmly coupled to a motor vehicle drive assembly, and a rotary core member, encompassed by a sheath, one end of which is locked in a bush member adapted to be engaged on said hollow shaft and restrained thereon by a radial restraining spring.

2. A flexible driving device for motor vehicle speedometers according to claim 1, characterized in that said hollow shaft is provided, at its free end portion, with a circumferential slot.

3. A flexible driving device for motor vehicle speedometers according to the preceding claims, characterized in that said rotary core is encompassed by a flexible sheath, at the end of which provided for coupling to a speed display instrument, there is connected a coupling member of a substantially conventional type.

4. A flexible driving device for motor vehicle speedometers according to one or more of the preceding claims, characterized in that on the opposite end of said sheath there is locked a bush member which is provided with a cylindrical recess adapted to be engaged by the end portion of said hollow shaft, said bush member being provided with two side notches, diametrically opposite to one another, adapted to restrain the two shaped ends of a resilient means comprising a spring.

5. A flexible driving device for motor vehicle speedometers according to one or more of the preceding claims, characterized in that said resilient means is provided with two spring arms including an inward bent portion provided for pressing against said slot of said hollow shaft so as to firmly restrain said bush member on said hollow shaft.

6. A flexibile driving device for motor vehicle speedometers according to the preceding claims, characterized in that said sheath is encompassed by a sound dampening tube made of foamed polyethylene or the like.

Fig.1

Fig.2

Fig. 4

Fig. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-U-8 809 414 (FIAT)<br>* Whole document *<br>--- | 1,2,4,5 | G 01 P 1/04<br>F 16 C 1/08 |
| X | GB-A-2 076 490 (KANTO SEIKI)<br>* Whole document *<br>--- | 1,2,4,5 | |
| A | US-A-2 021 241 (MALL)<br>* Whole document *<br>--- | 1,2,4,5 | |
| A | FR-A-1 152 440 (JAEGER)<br>* Whole document *<br>--- | 3 | |
| P,A | EP-A-0 347 389 (TECAFLEX)<br>* Column 1, lines 29-37 *<br>--- | 6 | |
| A | FR-A-1 035 899 (DAIMLER-BENZ)<br>* Whole document *<br>----- | 6 | |
| | | | TECHNICAL FIELDS SEARCHED (Int. Cl.5)<br><br>F 16 C<br>G 01 P |

The present search report has been drawn up for all claims

| Place of search | Date of completion of the search | Examiner |
|---|---|---|
| THE HAGUE | 18-07-1990 | ORTHLIEB CH.E. |